# EUROPÄISCHE PATENTSCHRIFT

(11) **EP 3 921 216 B1**
(45) Veröffentlichungstag und Bekanntmachung des Hinweises auf die Patenterteilung: **17.01.2024**
(21) Anmeldenummer: 20703215.2
(22) Anmeldetag: 03.02.2020
(51) Int. Cl.: B62D 1/181, B62D 1/183

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 04.02.2019 DE 102019201390
(43) Veröffentlichungstag der Anmeldung: 15.12.2021
(73) Patentinhaber: thyssenkrupp Presta AG, 9492 Eschen (LI); thyssenkrupp AG, 45143 Essen (DE)
(72) Erfinder: KREUTZ, Daniel, 6800 Feldkirch (AT); WILLI, Andreas, 6923 Lauterach (AT)
(74) Vertreter: thyssenkrupp Intellectual Property GmbH
(86) Internationale Anmeldenummer: PCT/EP2020/052547
(87) Internationale Veröffentlichungsnummer: WO 2020/161042

(56) Entgegenhaltungen:
- WO-A1-2017/140526
- WO-A1-2020/007723
- DE-A1-102004 010 805

## Beschreibung

### Stand der Technik

Die Erfindung betrifft ein Verfahren zum Verstellen einer Lenksäule für ein Kraftfahrzeug, umfassend eine Manteleinheit , in der eine Lenkspindel um eine Längsachse drehbar gelagert ist und die mindestens zwei in Längsrichtung der Längsachse um einen Verstellweg relativ zueinander verstellbar geführte Mantelrohre aufweist, wobei entlang des Verstellwegs in einem Bedienbereich die Mantelrohre weiter auseinander ausgefahren sind als in einem Übergangsbereich, wobei ein an den Mantelrohren angreifender motorischer Verstellantrieb elektrisch angesteuert wird zur relativen Verstellung der Mantelrohre mit einer vorgegebenen Verstellgeschwindigkeit.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Manteleinheit drehbar gelagert, mit der sie zusammen eine Stelleinheit bildet. Die Manteleinheit wird von einer an der Fahrzeugkarosserie befestigten Trageinheit gehalten. Verstellbare Lenksäulen ermöglichen durch eine Verstellung der Manteleinheit relativ zur Trageinheit die Einstellung der Lenkradposition relativ zur Fahrzeugkarosserie. Zur Längsverstellung ist es bekannt, die Lenksäule in Längsrichtung, d.h. in Richtung der Längsachse, verstellbar zu gestalten, um den Abstand zur Fahrerposition einzustellen. Zur Höhenverstellung kann die Lenkspindel quer zur Längsachse verstellt werden, um die Höhenposition des Lenkrads einzustellen.

Bei autonom fahrenden Fahrzeugen ist es bekannt, im manuellen Fahrbetrieb das Lenkrad in Bedienposition für einen bequemen manuellen Lenkeingriff an die Fahrerposition innerhalb eines Bedienbereichs zu positionieren, der im Folgenden auch als Betriebs- oder Komfortbereich bezeichnet wird. Im autonomen Fahrbetrieb, wenn kein manueller Lenkeingriff erfolgt, wird die Lenksäule eingefahren, d.h. längs zusammen gefahren, um das Lenkrad in eine Verstauposition außerhalb des Bedienbereichs zu bringen, so dass der Fahrzeuginnenraum für eine anderweitige Nutzung freigegeben wird.

Zur Längsverstellung ist eine Manteleinheit mit einer teleskopartigen Anordnung von Mantelrohren bekannt, wie sie beispielsweise in der EP 2 808 225 A1 beschrieben ist. Diese umfasst ein in Fahrtrichtung vorn an der Karosserie abgestütztes, äußeres Mantelrohr, in das ein inneres Mantelrohr in Achsrichtung teleskopartig eintaucht. Zur Längsverstellung ist ein motorischer Verstellantrieb vorgesehen, der als in Achsrichtung wirkender Spindeltrieb an den Mantelrohren angreift. Aus der Verstauposition, in der die Mantelrohre in Achsrichtung so weit wie möglich ineinander eingefahren sind, kann die Lenksäule mittels des Verstellantriebs bis in eine fahrerseitige Endposition verstellt werden, in der die Mantelrohre möglichst weit auseinander ausgefahren sind. Der maximale mögliche Verstellbereich zwischen Verstauposition und Endposition definiert den Verstellweg der Lenksäule.

Lenksäulen für autonomen Fahrbetrieb zeichnen sich durch einen großen Verstellweg aus, so dass die Verstauposition einen deutlichen Abstand von dem Bedienbereich hat, welcher sich von der maximal ausgefahrenen, fahrerseitigen Endposition lediglich über einen kleineren Teilbereich des Verstellwegs erstreckt.

Im manuellen Fahrbetrieb wird die Lenksäule eingestellt, so dass sich das Lenkrad in einer individuellen Bedienposition innerhalb eines Bedienbereichs befindet. Der Bedienbereich bezeichnet den Verstellbereich, in dem im manuellen Fahrbetrieb zur Eingabe von Lenkbefehlen ergonomisch sinnvolle Bedienpositionen einstellbar sind. Im Bedienbereich sind die Mantelrohre relativ weit auseinander ausgefahren. Werden die Mantelrohre weiter ineinander zusammen gefahren, schließt sich außerhalb des Bedienbereichs der Übergangsbereich an, in dem keine sinnvollen und sicheren Bedienpositionen eingestellt werden können, da der Fahrzeugführer das Lenkrad nicht in einer sicheren Art und Weise erreichen kann.

Innerhalb des Bedienbereichs ist zur Einstellung der Bedienposition eine feinfühlige, positionsgenaue Verstellung mittels des Verstellantriebs gefordert. Dafür wird der Verstellantrieb so betrieben, dass die Verstellung langsam und kontrolliert erfolgt. Dadurch ist es jedoch entsprechend zeitaufwendig, den relativ langen Übergangsbereich zu durchfahren, um die Verstauposition zu erreichen.

Aus der DE 10 2004 010805 A1 ist ein Verfahren mit den eingangs genannten Merkmalen bekannt. Dieses ermöglicht eine zeitliche Veränderung der Verstellgeschwindigkeit, die jedoch nicht mit dem Verstell- und Bedienbereich korreliert ist.

Angesichts der vorangehend erläuterten Problematik ist es eine Aufgabe der vorliegenden Erfindung, ein verbessertes Verfahren zur Verstellung einer Lenksäule mit großem Verstellweg anzugeben, welches einen optimierten Wechsel zwischen dem Bedienbereich und der Verstauposition ermöglicht.

### Darstellung der Erfindung

Diese Aufgabe wird erfindungsgemäß gelöst durch ein Verfahren zur Verstellung einer Lenksäule mit den Merkmalen des Anspruchs 1. Vorteilhafte Weiterbildungen ergeben sich aus den Unteransprüchen.

Zur Verstellung einer Lenksäule für ein Kraftfahrzeug, umfassend eine Manteleinheit, in der eine Lenkspindel um eine Längsachse drehbar gelagert ist und die mindestens zwei in Längsrichtung der Längsachse um einen Verstellweg relativ zueinander verstellbar geführte Mantelrohre aufweist, wobei entlang des Verstellwegs in einem Bedienbereich die Mantelrohre weiter auseinander ausgefahren sind als in einem Übergangsbereich, wobei ein an den Mantelrohren angreifender motorischer Verstellantrieb elektrisch angesteuert wird zur relativen Verstellung der Mantelrohre mit einer vorgegebenen Verstellgeschwindigkeit, sieht das erfindungsgemäße Verfahren vor, dass in dem Bedienbereich eine erste Verstellgeschwindigkeit und im Übergangsbereich eine zweite Verstellgeschwindigkeit eingestellt wird, die höher ist als die erste Verstellgeschwindigkeit.

Im Bedienbereich, der sich in einem Abschnitt des Verstellwegs in der Nähe des maximal ausgefahrenen Endbereichs erstreckt und der im Folgenden auch Betriebs- oder Komfortbereich genannt wird, kann eine manuelle Eingabe von Lenkbefehlen durch Drehung des Lenkrads erfolgen. Der Verstellantrieb kann gemäß dem erfindungsgemäßen Verfahren innerhalb des definierten Bedienbereichs angesteuert werden, um die Mantelrohre mit einer ersten Verstellgeschwindigkeit, auch als Justier- oder Positioniergeschwindigkeit bezeichnet, relativ langsam zueinander zu bewegen, wodurch eine feinfühlige, sichere und genaue Längsverstellung des Lenkrads ermöglicht wird. Durch die langsame Verstellung ist eine Verletzungsgefahr praktisch ausgeschlossen. In jeder Bedienposition innerhalb des Bedienbereichs können Lenkbefehle eingegeben werden, bevorzugt auch während einer Verstellung durch den Verstellantrieb.

Beim Wechsel zwischen manuellem und autonomem Fahrbetrieb werden die Mantelrohre im Übergangsbereich, der sich zwischen dem Bedienbereich und der Verstauposition im maximal zusammengefahrenen Zustand der Mantelrohre befindet, erfindungsgemäß zumindest abschnittweise mit einer größeren Verstellgeschwindigkeit relativ zueinander bewegt, nämlich mit der relativ zur ersten Verstellgeschwindigkeit höheren zweiten Verstellgeschwindigkeit, die auch als Verstaugeschwindigkeit bezeichnet werden kann. Dabei erfolgt beim Übergang vom manuellen in den autonomen Fahrbetrieb die Verstellung innerhalb des Bedienbereichs zunächst mit der ersten Verstellgeschwindigkeit bis zum verstauseitigen, zusammengefahrenen Ende des Bedienbereichs, an den sich der Übergangsbereich anschließt. Beim Übergang in den Übergangsbereich wird die höhere zweite Verstellgeschwindigkeit aktiviert, so dass die Lenksäule schneller bis in die Verstauposition eingefahren werden kann, wobei es zu einem Stopp in der Verstauposition kommt, so dass die Verstellgeschwindigkeit in der Verstauposition Null ist. Der besondere Vorteil ist, dass das Lenkrad zunächst langsam aus dem Bedienbereich heraus bewegt wird, so dass keine Verletzungsgefahr besteht, und erst beim Eintritt in den Übergangsbereich, wenn ohnehin keine Bedienung mehr erfolgt bzw. erfolgen kann, eine schnelle Verstaubewegung mit höherer Verstellgeschwindigkeit erfolgt. Dadurch wird der Verstauvorgang beschleunigt.

Beim Übergang vom autonomen in den manuellen Fahrbetrieb erfolgt die Verstellung aus der Verstauposition heraus durch den Übergangsbereich mit der höheren, zweiten Verstellgeschwindigkeit, bis der Bedienbereich erreicht wird. Dann wird die Bewegung auf die erste Verstellgeschwindigkeit abgebremst, und mit dieser erfolgt eine langsamere, sichere und positionsgenaue Verstellung innerhalb des Bedienbereichs, bis die gewählte Bedienposition erreicht ist, und die Verstellung gestoppt wird. Vorteilhaft ist dabei, dass die schnelle Verstellung außerhalb des Bedienbereichs erfolgt, so dass keine versehentliche Kollision mit dem sich schnell bewegenden Lenkrad auftreten kann.

Die Verstellung innerhalb des Bedienbereichs erfolgt bevorzugt durch einen Betätigungsbefehls des Fahrzeugführers, wobei dieser Betätigungsbefehl durch Bedienung eines entsprechenden Eingabemittels, beispielsweise eines Schalters oder Tasters, erfolgen kann.

Es kann vorgesehen sein, dass innerhalb des Bedienbereichs die Eingabe eines Lenkund/oder sonstigen Betätigungsbefehls in die Lenksäule ermöglicht ist, auch während der Verstellung mit der ersten, langsamen Verstellgeschwindigkeit. Dadurch kann insbesondere die Reaktionszeit für einen manuellen Eingriff beim Wechsel vom autonomen in den manuellen Fahrbetrieb reduziert werden, wodurch die Sicherheit erhöht werden kann.

Es kann vorgesehen sein, dass innerhalb des Übergangsbereichs keine Eingabe eines Lenkund/oder sonstigen Betätigungsbefehls in die Lenksäule möglich ist. Durch die Deaktivierung der Eingabemöglichkeit beim schnellen Verstellen kann die Gefahr von versehentlichen Fehleingaben und auch das Verletzungsrisiko minimiert werden.

Es kann weiterhin vorgesehen sein, dass eine Übergangsposition, an welcher der Übergang zwischen dem Bedienbereich und dem Übergangsbereich erfolgt, variabel vorgegeben werden kann. Dadurch ist es möglich, die Länge des Bedienbereichs, in dem erfindungsgemäß eine langsamere Verstellung erfolgt, dynamisch anzupassen, beispielsweise in Abhängigkeit von der Fahrsituation oder davon, ob das Fahrzeug im autonomen oder manuellen Fahrmodus betrieben wird. Die Übergangsposition, welche die Grenze zwischen unterschiedlichen Verstellgeschwindigkeiten markiert, kann dann weiter nach vorn oder nach hinten verlagert werden.

In einer vorteilhaften Ausführung ist ein Verstaubereich vorgesehen, der sich in Längsrichtung zwischen dem Übergangsbereich und der Verstauposition erstreckt. Durch das erfindungsgemäße Verfahren kann der relativ lange Übergangsbereich beim Wechsel zwischen autonomem und manuellem Betrieb schnell durchfahren werden, und die Bedienposition ist sicher und bequem einstellbar.

Der Verstaubereich schließt sich an den Übergangsbereich an und erstreckt sich bis zur Verstauposition. In diesem speziellen Fall weist der Verstaubereich eine Ausdehnung in Längsrichtung von quasi Null auf, so dass der Verstaubereich gleich der Verstauposition ist.

Es kann vorteilhaft sein, dass ein Verstaubereich vorgesehen ist, in dem die Mantelrohre weiter zusammengefahren sind als in dem Übergangsbereich, wobei in dem Verstaubereich eine dritte Verstellgeschwindigkeit eingestellt wird, die geringer ist als die zweite Verstellgeschwindigkeit. Bevorzugt ist die dritte Verstellgeschwindigkeit größer als die erste Verstellgeschwindigkeit und kleiner als die zweite Verstellgeschwindigkeit. In einem teilweise ausgefahrenen Verstaubereich, der sich zwischen dem Übergangsbereich und der Verstauposition befindet, könnte ein geringes Risiko einer Kollision oder einem Einklemmen zwischen Lenkrad und der Instrumententafel bestehen. Um dieses Risiko weiter zu verringern, kann dadurch, dass die dritte Verstellgeschwindigkeit kleiner ist als die zweite Verstellgeschwindigkeit, ein schnelleres Abbremsen erfolgen, und ein versehentlicher Kontakt kann rechtzeitig erkannt und vermieden werden. Dabei wird durch die relativ zur ersten Verstellgeschwindigkeit höhere dritte Verstellgeschwindigkeit eine schnellere Verstellung als im Bedienbereich ermöglicht, wodurch immer noch ein schneller Wechsel zwischen autonomem und manuellem Betrieb gewährleistet ist.

Es kann vorteilhaft sein, dass eine Veränderung der Verstellgeschwindigkeit linear erfolgt. Eine Veränderung der Verstellgeschwindigkeit erfolgt erfindungsgemäß beim Übergang zwischen der ersten und zweiten Verstellgeschwindigkeit, und umgekehrt, und/oder beim Wechsel in eine oder aus einer dritten Verstellgeschwindigkeit, oder umgekehrt. Eine lineare Veränderung der Verstellgeschwindigkeit entspricht einer konstanten Beschleunigung, entweder positiv oder negativ. Ein derartiger Übergang mit einer linearen Rampe ist mit geringem Aufwand realisierbar.

Als vorteilhafte Weiterbildung kann vorgesehen sein, dass eine Veränderung der Verstellgeschwindigkeit nichtlinear erfolgt. Entsprechend kann zum Übergang von einer auf eine andere Verstellgeschwindigkeit eine progressive und/oder degressive Beschleunigung realisiert sein, entweder positiv oder negativ. Dabei ist es auch denkbar und möglich, zunächst eine progressive daran anschließend eine degressive Änderung vorzusehen, um einen besonders sanften, geräusch- und verschleißarmen Geschwindigkeitsübergang zwischen verschiedenen Verstellgeschwindigkeiten zu realisieren. Beispielsweise kann ein exponentieller, logarithmischer, sinusförmiger oder sonstiger kurvenförmiger Verlauf für die Änderung der Verstellgeschwindigkeit vorgegeben werden.

Bevorzugt ist die in einem Geschwindigkeits-Weg-Diagramm aufgetragene Geschwindigkeit über den gesamten Verlauf stetig differenzierbar. Dadurch lässt sich ein für den Fahrzeugführer als angenehm empfundener Bewegungsablauf bei der Verstellung der Lenksäule erzeugen.

Es kann vorgesehen sein, dass die relative Position der Mantelrohre mittels mindestens eines Positionssensors erfasst wird, und die Verstellgeschwindigkeit in Abhängigkeit von der erfassten Position eingestellt wird. Durch einen oder mehrere Positionssensoren, die beispielsweise magnetische, kapazitive, induktive, optische oder andere geeignete elektrische Sensorelemente und eine daran angepasste elektronische Auswerteschaltung aufweisen können, können die relative Position der einzelnen Mantelrohre zueinander, und/oder eine Position der Lenksäule und/oder Manteleinheit im Kraftfahrzeug erfasst werden, und zwar in Längs- und/oder in Höhenrichtung. Die erfasste Position kann ausgewertet, und die Verstellgeschwindigkeit in Abhängigkeit von der erfassten Position eingestellt werden. Beispielsweise kann mittels eines Positionssensors erkannt werden, dass das Ende des Bedienbereichs erreicht ist, und die Änderung der Verstellgeschwindigkeit abhängig von der Position oder einer daraus abgeleiteten Größe vorgenommen werden.

Alternativ oder zusätzlich können weitere Sensoren vorgesehen sein, beispielsweise Annäherungs- oder Kontaktsensoren, die auf optischen, akustischen, thermischen, induktiven, kapazitiven oder anderen geeigneten Messverfahren basieren, und Betriebszustände des Fahrzeugs und/oder der Lenksäule erfassen, und die dabei ermittelten Messwerte können zur Steuerung der Verstellgeschwindigkeit genutzt werden. Beispielsweise kann mittels eines Näherungssensors erfasst werden, ob sich beim Verstellen Hindernisse im Bewegungsweg der Lenksäule befinden, und die Verstellgeschwindigkeit kann davon ausgehend reduziert oder gestoppt werden.

In einer Weiterbildung des Verfahrens kann vorgesehen sein, dass der Verstellantrieb bei einer kleineren Verstellgeschwindigkeit einer höhere Verstellkraft ausübt als bei einer höheren Verstellgeschwindigkeit. Die Verstellkraft bezeichnet die von dem Verstellantrieb in der Verstellrichtung auf die relativ zueinander in Längsrichtung teleskopartig verschiebbaren Mantelrohre ausgeübte Kraft. Dadurch, dass eine Verstellung im Bedienbereich relativ langsam mit hoher Verstellkraft, und dagegen im Übergangsbereich relativ dazu schneller mit geringerer Verstellkraft erfolgen kann, bleibt die im Mittel zur Verstellung aufzuwendende Leistung im Wesentlichen gleich. Dadurch kann der Verstellantrieb hinsichtlich seiner Leistung optimal an sämtliche auftretenden Betriebszustände angepasst werden. Die Kraft bzw. die Leistung korrelieren mit der während der Verstellung in den Bereichen erforderlichen Stromstärke. Dank dieser Ausführung kann die Stromstärke begrenzt werden, so dass elektrische Leitungen mit einem geringeren Querschnitt vorgesehen werden können.

Im Einzelnen können durch die Ausgestaltung der teleskopierbaren Mantelrohranordnung innerhalb des Verstellwegs Teilabschnitte ausgebildet sein, in denen die zur Verstellung erforderliche Verstellkraft reduziert oder erhöht ist. Dabei bildet der Bedienbereich einen Bereich möglicher Verstellpositionen, die zur manuellen Bedienung als funktionale Betriebspositionen im Betrieb zumindest zeitweise statisch eingestellt werden können. In diesen Bedienpositionen im Bedienbereich ist eine hohe Steifigkeit und Eigenfrequenz der Lenksäule gefordert. Der Verstau- oder Übergangsbereich definiert einen außerhalb des Bedienbereichs liegenden Verstellbereich, der innerhalb des Verstellwegs durchlaufen werden muss, um die Lenksäule in oder aus der Verstauposition zu bewegen. Im Übergangsbereich bzw. im Verstaubereich befindet sich keine definierte Bedienposition, es erfolgt lediglich eine relative Bewegung der Mantelrohre zum Ein- oder Ausfahren der Lenksäule.

Innerhalb des Bedienbereichs können die Mantelrohre mit geringen Toleranzen, spielarm oder spielfrei ineinander geführt sein, so dass eine hohe Steifigkeit und Eigenfrequenz der Manteleinheit gewährleistet ist, wodurch eine relativ höhere Verstellkraft erforderlich sein kann, die als Bedienverstellkraft bezeichnet werden kann. Diese kann sich in der Größe der im Stand der Technik über den gesamten Verstellweg erforderlichen Verstellkraft bewegen. Im Übergangsbereich sind die Anforderungen hinsichtlich Steifigkeit und Eigenfrequenz geringer, und die teleskopierende Führung kann erfindungsgemäß leichtgängiger ausgestaltet sein, beispielsweise durch größeres Spiel oder verringerte Reibungskräfte zwischen den Mantelrohren. Dadurch kann die Verstellkraft bei einer erfindungsgemäßen Lenksäule im Übergangsbereich, die als Übergangsverstellkraft bezeichnet werden kann, kleiner sein als die Bedienverstellkraft.

Bei dem erfindungsgemäßen Verfahren kann der Verstellantriebs angesteuert werden, so dass in dem Bedienbereich die erste Verstellgeschwindigkeit bei einer höheren ersten Verstellkraft bereitgestellt wird, und in dem Übergangsbereich die zweite Verstellgeschwindigkeit bei einer relativ zur ersten Verstellkraft geringeren zweiten Verstellkraft, die kleiner sein kann als die erste Verstellkraft.

Die Mantelrohre sind vorzugsweise teleskopartig angeordnet und ineinander geführt, so dass sie zur Längsverstellung der Lenksäule teleskopierend ein- und ausfahrbar sind. In einer zweiteiligen Teleskopanordnung ist ein Innenmantelrohr teleskopartig in einem Außenmantelrohr. Zur Bildung einer drei- oder mehrteiligen Teleskopanordnung können ein oder mehrere Zwischenmantelrohre koaxial zwischen Innen- und Außenmantelrohr eingesetzt sein.

Der Verstellantrieb kann beispielsweise einen Spindeltrieb umfassen, bei dem eine Spindelmutter und eine darin eingeschraubte Gewindespindel von einem elektrischen Motor relativ zueinander motorisch drehend antreibbar sind, wodurch eine Relativbewegung in Achsrichtung der Gewindespindel bewirkt wird. Die Spindelmutter und die Gewindespindel greifen an den Mantelrohren an, wodurch diese axial relativ zueinander bewegbar sind.

Unter der Achsrichtung oder der Längsrichtung ist die Richtung der Längsachse zu verstehen, wobei die Begriffe gleichbedeutend verwendet werden.

Im Bedienbereich der Lenksäule, sind in der Regel nur kleinere Verstellungen erforderlich, beispielsweise zur Feineinstellung einer individuellen Lenkradposition, so dass dort die Verstellung ohne Nachteil mit kleinerer Verstellgeschwindigkeit erfolgen kann.

Bevorzugt erstreckt sich der Bedienbereich in Richtung der Längsachse um mindestens 30mm, besonders bevorzugt um mindestens 50mm. Bevorzugt erstreckt sich der Bedienbereich in Richtung der Längsachse auf maximal 100mm.

Bevorzugt erstreckt sich der Übergangsbereich in Richtung der Längsachse zwischen dem Bedienbereich und der Verstauposition bzw. dem Verstaubereich um mindestens 30mm, besonders bevorzugt um mindestens 50mm und ganz besonders bevorzugt auf mindestens 100mm.

Um eine vorgegebene mittlere Verstellgeschwindigkeit über den gesamten Verstellweg zu erreichen, kann ein verglichen mit dem Stand der Technik kleiner dimensionierter Verstellantrieb eingesetzt werden. Dadurch können das Gewicht und der erforderliche Bauraum, der Energieverbrauch und der Steuerungsaufwand reduziert werden.

Es kann mindestens ein erster sogenannter Komfortbereich, auch als Verstaubereich bezeichnet, im Bereich maximal ineinander eingefahrener Mantelrohre, und mindestens ein zweiter Komfortbereich im Bereich maximal auseinander ausgefahrener Mantelrohre ausgebildet sein, wobei in dem zweiten Komfortbereich der Bedienbereich ausgebildet sein kann, oder mit diesem identisch ist. Auf den Bedienbereich folgt ein Übergangsbereich zwischen dem ersten und dem zweiten Komfortbereich. In dem genannten ersten Komfortbereich, der dem Verstaubereich entspricht, befindet sich im Endbereich die Verstauposition, in der die Lenksäule bei voll zusammengefahrenen Mantelrohren im autonomen Fahrbetrieb möglichst sicher, spielarm und vibrationsarm gehalten wird. Der zweite Komfortbereich mit dem Bedienbereich, müssen die ausgeübten Lenk- und Quermomente sicher von der Manteleinheit abgestützt werden, und für die Verbindung der Mantelrohre ist eine entsprechend hohe Steifigkeit gefordert. Der Übergangsbereich wird lediglich kurzzeitig beim Verstellen zwischen der Verstau- und Bedienposition dynamisch durchfahren, wobei die Anforderungen an Steifigkeit und Resonanzfrequenz geringer sind als in der Bedienposition.

Es kann vorgesehen sein, dass in dem Übergangsbereich in größeres Spiel zwischen den Mantelrohren ausgebildet ist als in dem Bedienbereich. Das radiale Spiel zwischen den Mantelrohren bestimmt die Reibungskraft bei einer teleskopierenden Verstellung, die von dem Verstellantrieb überwunden werden muss. Im Bedienbereich kann eine spielarme oder spielfreie Linearpassung zwischen den Mantelrohren realisiert sein, die für eine hohe Steifigkeit sorgt. Im Übergangsbereich kann die Linearpassung größeres Spiel haben, wodurch die bei einer teleskopierenden Verstellung in Achsrichtung wirkende Reibungskraft, und damit die erforderliche Verstellkraft verringert wird.

Alternativ ist es denkbar und möglich, die bei der teleskopierenden Verstellung relativ zueinander bewegten, gegeneinander gerichteten Flächen im Bedien- und Verstaubereich unterschiedlich auszugestalten, so dass unterschiedliche Reibungskräfte erzeugt werden, beispielsweise durch unterschiedliche Oberflächenstrukturen, Materialien, lokale elastische Verformungen oder dergleichen.

Eine Ausführung der Erfindung kann vorsehen, dass ein äußeres Mantelrohr, auch als Außenmantelrohr bezeichnet, einen inneren Lagerabschnitt aufweist, der sich in Achsrichtung über einen Teil des Verstellwegs erstreckt, und einen inneren Führungsabschnitt, der sich in Achsrichtung über einen Teil des Verstellwegs erstreckt und einen größeren Innenquerschnitt hat als der innere Lagerabschnitt, und ein in dem äußeren Mantelrohr aufgenommenes inneres Mantelrohr, auch als Innenmantelrohr bezeichnet, einen äußeren Lagerabschnitt aufweist, der sich in Achsrichtung über einen Teil des Verstellwegs erstreckt, und einen äußeren Führungsabschnitt, der sich in Achsrichtung über einen Teil des Verstellwegs erstreckt und einen kleineren Außenquerschnitt hat als der äußere Lagerabschnitt, wobei der äußere Lagerabschnitt in dem inneren Lagerabschnitt positionierbar ist.

In der Funktion als Außenmantelrohr wird in dem Innenquerschnitt ein Innenmantelrohr in Achsrichtung teleskopartig verschiebbar aufgenommen. Entsprechend weist ein Zweifach-Teleskop lediglich jeweils ein Außen- und Innenmantelrohr auf, und bei einem Mehrfach-Teleskop fungiert ein dazwischen eingefügtes Zwischenmantelrohr jeweils gleichzeitig als Au-ßen- und Innenmantelrohr.

Werden ein Außen- und ein Innenmantelrohr durch Ein- oder Ausfahren telekopierend relativ zueinander bewegt, werden die inneren und äußeren Lager- und Führungsabschnitte in Achsrichtung relativ zueinander bewegt und abhängig vom relativen Verstellzustand der Mantelrohre in koaxiale Anordnung gebracht. Dabei können prinzipiell zwei Zustände auftreten, von denen der eine den Komfortbereich, beispielsweise den Bedienbereich, definiert, in dem der äußere Lagerabschnitt sich zumindest teilweise in dem inneren Lagerabschnitt befindet, und der andere den Übergangsbereich , in dem der äußere und innere Lagerabschnitt Abstand in Achsrichtung haben, d. g. sich die Lagerabschnitte des einen Mantelrohrs im Bereich der Führungsabschnitte des jeweils anderen Mantelrohrs befinden.

Hinsichtlich Form und Abmessungen sind der äußere und innere Lagerabschnitt so aneinander angepasst, dass sie ein spielarme oder spielfreie Linearpassung in Achsrichtung bilden, wobei das Lagerspiel quer zur Längsachse entsprechend gering ist. In dem dadurch gebildeten Bedienbereich wird eine Linearlagerung mit einer hohen Steifigkeit und Eigenfrequenz der Mantelrohranordnung erzeugt, in dem die erforderliche Verstellkraft, die vorangehend als Bedienverstellkraft oder Komfortverstellkraft eingeführt wurde, entsprechend hoch ist.

Werden die Mantelrohre durch relative Verstellung aus dem Bedienbereich heraus bewegt, so dass die Lagerabschnitte in Achsrichtung voneinander getrennt werden, befindet sich das Innenmantelrohr mit seinem äußeren Lagerabschnitt in dem inneren Führungsabschnitt des Außenmantelrohrs und mit seinem äußeren Führungsabschnitt in dem inneren Lagerabschnitt des Außenmantelrohrs. Dadurch kommen die Mantelrohre in einen Übergangsbereich, in dem sie zur Längsverstellung linear geführt werden, wobei zwischen den koaxial zueinander angeordneten Lager- und Führungsabschnitten ein größeres Spiel besteht, nämlich das sogenannte Führungsspiel, als im Komfortbereich zwischen den Lagerabschnitten. Dadurch ist die erforderliche Verstellkraft im Übergangsbereich, die als Übergangsverstellkraft bezeichnet wird, geringer als die Bedienverstellkraft.

Durch die in Achsrichtung abwechselnde Ausbildung von Lager- und Führungsabschnitten wird die Mantelrohranordnung bei einer Verstellung längs des Verstellwegs in Abhängigkeit vom jeweiligen Verstellzustand selbsttätig in einen Komfort- oder Übergangsbereich gebracht. Das äußerste Mantelrohr einer Teleskopanordnung weist lediglich innere Lager- und Führungsabschnitte auf, das innerste Mantelrohr einer Teleskopanordnung weist lediglich äußere Lager- und Führungsabschnitte auf, und ein in einem Mehrfach-Teleskop dazwischen eingefügtes Zwischenmantelrohr weist innere und äußere Lager- und Führungsabschnitte auf.

Bevorzugt weist ein Mantelrohr in seinen beiden Endabschnitten jeweils einen inneren und/oder äußeren Lagerabschnitt auf, zwischen denen sich ein innerer und/oder äußerer Führungsabschnitt erstreckt. Durch diese Anordnung werden in den Endbereichen, wenn die Mantelrohre maximal ein- oder ausgefahren sind, Komfortbereiche realisiert, beispielsweise im ausgefahrenen Endbereich der Bedienbereich. Diese Konfiguration korrespondiert mit den vorangehend erläuterten Anforderungen an eine Lenksäule für autonomes Fahren, bei der in der Verstauposition die Mantelrohre maximal ineinander eingefahren sind, und der Bedienbereich sich im Endbereich des maximalen Auszugs befindet. In der Verstauposition sind die Lagerabschnitte beider Endbereiche koaxial ineinander angeordnet. Im Bedienbereich befindet sich der bezogen auf die Fahrtrichtung vordere Lagerabschnitt des fahrerseitigen, hinteren Mantelrohrs mit dem hinteren Lagerabschnitt des vorderen, fahrzeugseitigen Mantelrohrs im dem vorangehend beschriebenen spielarmen Lagereingriff. Ein Vorteil dieser Ausführung ist, dass durch das Verstellen der Lenksäule mittels des Verstellantriebs die Komfort- und Übergangsbereiche selbsttätig mechanisch im Bereich der Verstauposition und des Bedienbereichs eingenommen werden.

Es kann vorgesehen sein, dass an einem Mantelrohr ein in den Querschnitt zwischen den Mantelrohren vorstehendes Lagerelement ausgebildet ist. Ein Lagerelement kann im Innenquerschnitt eines Mantelrohrs angebracht sein, und einen kleineren Innenquerschnitt haben als das Mantelrohr, wodurch es einen inneren Lagerabschnitt bildet. Wird ein Lagerelement welches einen größeren Außenquerschnitt hat als das Mantelrohr, außen auf dem Mantelrohrs angebracht, kann es einen äußeren Lagerabschnitt bilden. Wie vorangehend erläutert, kann ein Komfortbereich dadurch eingestellt werden, dass die durch die Lagerelemente gebildeten Lagerabschnitte in Achsrichtung in Deckung gebracht werden, und ein Übergangsbereich durch axialen Abstand der Lagerelemente.

Das Lagerelement kann ein Gleitelement aufweisen, bevorzugt eine Gleithülse, die mit einem Mantelrohr in Achsrichtung fest verbunden ist. Eine im Querschnitt über den Umfang durchgehende Gleithülse, oder auch ein oder mehrere über den Umfang segmentförmig verteilte Gleitelemente können als äußere Gleithülse außen auf einem Innenmantelrohr oder als innere Gleithülse innen in einem Außenmantelrohr zur Bildung eines Lagerabschnitts angebracht sein. Miteinander korrespondierende innere und äußere Gleithülsen sind aneinander angepasst, so dass eine innere Gleithülse spielarm oder spielfrei in Achsrichtung in einer äu-ßeren Gleithülse gleiten kann. Eine Gleithülse kann rohrabschnittförmig ausgebildet und dabei an den Querschnitt der Mantelrohre angepasst sein, die einen runden, unrunden oder mehreckigen, beispielsweise vier-, sechs- oder achteckigen Querschnitt haben können. Alternativ kann die bevorzugt aus einem Kunststoff ausgebildete Gleithülse auch direkt auf das entsprechende Mantelrohr aufgespritzt sein, beispielsweise durch Kunststoff-Spritzgießen.

Die Gleitelemente können reibungsmindernd ausgestaltet sein, beispielsweise durch eine Gleitbeschichtung der Oberfläche, oder durch Ausbildung aus einem gut gleitfähigen Material, wie Kunstoffen, etwa PTFE (Polytetrafluorethylen), oder einem Bunt- oder Lagermetall. Dadurch kann durch die Gleitelemente im Komfortbereich eine trotz geringen Spiels relativ leicht verstellbare Teleskoplagerung realisiert werden. Außerhalb des Komfortbereichs haben die Gleitelemente in einem Führungsabschnitt zu den Innen- und Außenmantelflächen der Mantelrohre ein radiales Führungsspiel, welches größer ist als das Lagerspiel zwischen den Gleitelementen im Komfortbereich.

Es kann vorgesehen sein, dass das Lagerelement zumindest einen Rollkörper aufweist, der in einem Mantelrohr um eine Rollachse drehbar gelagert ist. In einem Lagerabschnitt können ein, bevorzugt mehrere Rollkörper, beispielsweise Rollen, Nadelrollen oder dergleichen, in einem Mantelrohr jeweils um eine quer zur Längsachse liegende Rollachse drehbar gelagert sein, die in Achsrichtung relativ zum Mantelrohr fixiert ist. Der Rollkörper von dem einen Mantelrohr radial nach innen oder außen vor, und ist so bemessen, dass er an einem anderen Mantelrohr in Achsrichtung außen oder innen in Achsrichtung abrollbar ist. Beispielsweise können im äußeren Lagerabschnitt eines Innenmantelrohrs nach außen vorstehende Rollen gelagert sein, die im Komfortbereich, der dem Bedienbereich und/oder dem Verstaubereich entspricht, spielarm oder spielfrei innen in einem Lagerabschnitt eines Außenmantelrohrs abrollen können, und die im Übergangsbereich spielhaltig durch einen im Querschnitt größeren Führungsbereich des Außenmantelrohrs entlangbewegt werden können. Dadurch wird eine lineare Wälzlagerung gebildet, die im Komfortbereich eine hohe Steifigkeit erzeugt, und leichtgängig durch den Übergangsbereich bewegbar ist.

Bevorzugt sind die Rollkörper in einer oder mehreren achsparallelen ersten Reihen angeordnet. Die Reihen können in Umfangsrichtung verteilt, bevorzugt gleichmäßig verteilt auf einem Mantelrohr angeordnet sein. Sind in einer Mehrfach-Teleskopanordnung drei oder mehr Mantelrohre ineinander angeordnet, ist es vorteilhaft, dass zwischen koaxial benachbarten Mantelrohren die Rollkörper in Umfangsrichtung versetzt zueinander, auf Lücke angeordnet sind.

Es ist möglich, dass die Lenkspindel mit einem Feedback-Aktuator gekoppelt ist. Ein Feedback-Aktuator dient bei einem mechanisch nicht gekoppelten Steer-by-Wire-Lenksystem dazu, dem Fahrer über das Lenkrad eine haptische Rückmeldung abhängig von der Fahrsituation zu geben, zur Vermittlung eines Lenkgefühls ähnlich wie bei konventionellen mechanisch gekoppelten Lenkungen. Ein Feedback-Aktuator weist hierzu eine Aktuatoreinheit auf, die einen als Handmoment- oder Lenkradsteller dienenden Stellantrieb umfasst, und die abhängig von einem Rückkopplungs-Signal ein dem realen Reaktionsmoment entsprechendes Rückstellmoment (Feedbackmoment) über die Lenkwelle in das Lenkrad einkoppelt. Derartige "Force-Feedback"-Systeme geben dem Fahrer den Eindruck einer realen Fahrsituation wie bei einer konventionellen Lenkung, was eine intuitive Reaktion erleichtert.

Die Manteleinheit bildet mit der darin gelagerten Lenkspindel eine Stelleinheit. Die Manteleinheit kann an einer mit einer Fahrzeugkarosserie verbindbaren Trageinheit gehalten sein und um eine quer zur Längsachse liegende Schwenkachse höhenverschwenkbar gelagert sein. Durch eine Verschwenkung um diese horizontale Schwenkachse kann eine Höhenverstellung realisiert werden, bei der das am hinteren Ende der Lenkspindel angebrachte Lenkrad in der Höhe relativ zur Fahrerposition eingestellt werden kann.

Die Höhenverstellung kann manuell erfolgen. Insbesondere zum automatisierten Verstauen der Lenksäule beim autonomen Fahren ist es vorteilhaft, dass ein motorischer Höhenverstellantrieb zwischen der Manteleinheit und einer an der Karosserie des Kraftfahrzeugs anbringbaren Trageinheit angebracht ist, der elektrisch ansteuerbar ist zur relativen Höhenverstellung der Manteleinheit quer zur Längsachse mit einer vorgegebenen Höhenverstellgeschwindigkeit. Der Höhenverstellantrieb kann im Prinzip gleichartig aufgebaut sein wie der vorangehend beschriebene Verstellantrieb zur Längsverstellung, beispielsweise als von einem elektrischen Motor antreibbarer Spindeltrieb. Es kann mindestens eine Höhenverstellgeschwindigkeit einstellbar sein, oder eine erste Höhenverstellgeschwindigkeit und eine zweite Höhenverstellgeschwindigkeit, die größer oder kleiner ist als eine erste Höhenverstellgeschwindigkeit.

Bevorzugt kann gemäß dem erfindungsgemäßen Verfahren die Höhenverstellung in Abhängigkeit von der Verstellung in Längsrichtung erfolgen. Dabei ist es vorteilhaft, dass die Höhenverstellung zumindest teilweise zeitgleich mit der Längsverstellung in Richtung der Längsachse erfolgt. Durch die gleichzeitige, überlagerte Verstellung in Längs- und Höhenrichtung kann die Verstauposition, die durch eine vorgegebene Höhenverstellung bei maximal eingefahrener Längsverstellung definiert ist, beim Wechsel zwischen autonomem und manuellem Fahrbetrieb schneller eingenommen und verlassen werden.

Im Zusammenspiel mit dem erfindungsgemäßen Verfahren ist es vorteilhaft, dass die Höhenverstellung überwiegend im Verstaubereich erfolgt. Im Bedienbereich wird beim automatisierten Verstauen vorzugsweise nur eine Verstellung in Längsrichtung mit der ersten, kleineren Verstellgeschwindigkeit durchgeführt. Das Lenkrad bewegt sich somit zunächst nur langsam in Längsrichtung innerhalb des Bedienbereichs. Sobald der Bedienbereich verlassen und daran anschließend der Übergangsbereich erreicht wird, werden die beschleunigte Längsverstellung mit der zweiten Verstellgeschwindigkeit, und bevorzugt damit einhergehend, zumindest zeitweise zeitgleich, die Höhenverstellung eingeschaltet. Dadurch ergibt sich der Vorteil einer schnellen, kombinierten Längs- und Höhenverstellung, welche außerhalb des Bedienbereichs weitgehend ohne Kollisionsrisiko ausgeführt werden kann, bis die Verstauposition erreicht ist. Umgekehrt kann zum Wechsel zwischen Verstau- und Bedienposition die Lenksäule in einer kombinierten, schnellen Längs- und Höhenverstellung aus der Verstauposition heraus bis an die Bedienposition verstellt werden, um anschließend im Bedienbereich zunächst nur in Längsrichtung mit der langsameren, zweiten Verstellgeschwindigkeit verstellt zu werden, bis die gewählte Bedienposition erreicht ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: die Lenksäule gemäß Figur 1 in einer schematischen teilweise geöffneten Innenansicht,
- Figur 3: die Lenksäule gemäß Figur 1 in einer weiteren schematischen teilweise geöffneten Innenansicht,
- Figur 4: einen Längsschnitt durch die Lenksäule gemäß Figur 1,
- Figur 5: eine vergrößerte Detailansicht von Figur 4,
- Figur 6: ein Querschnitt A-A durch die Lenksäule gemäß Figur 4,
- Figur 7: einen Längsschnitt durch eine zweite Ausführungsform einer erfindungsgemäßen Lenksäule,
- Figur 8: eine vergrößerte Detailansicht von Figur 7,
- Figur 9: eine schematische Detailansicht von Figur 7 der Lenksäule in einem ersten Komfortbereich im Bedienbereich,
- Figur 10: eine schematische Detailansicht von Figur 7 der Lenksäule in einem Übergangsbereich,
- Figur 11: eine schematische Detailansicht von Figur 7 der Lenksäule in einem ersten Komfortbereich/Verstaubereich in Verstauposition,
- Figur 12: eine schematische Schnittansicht der Lenksäule gemäß Figur 7,
- Figur 13: jeweils ein Verstellkraft-Weg-, ein Geschwindigkeits-Weg- und ein Reibungskraft-Weg-Diagramm einer erfindungsgemäßen Lenksäule,
- Figur 14: jeweils ein Verstellkraft-Weg- und ein Reibungskraft-Weg-Diagramm analog zu Figur 13, und ein modifiziertes Geschwindigkeits-Weg-Diagramm,
- Figur 15: zusammengehörende Geschwindigkeits-Weg-Diagramme in Längs- und Höhenrichtung,
- Figur 16: eine zweite Ausführung einer Lenksäule zur Durchführung des erfindungsgemäßen Verfahrens in einer schematischen perspektivischen Ansicht,
- Figur 17: ein Geschwindigkeits-Weg-Diagramm bei der Verstellung einer Lenksäule gemäß Figur 16,
- Figur 18: ein modifiziertes Geschwindigkeits-Weg-Diagramm bei der Verstellung einer Lenksäule analog zu Figur 16.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

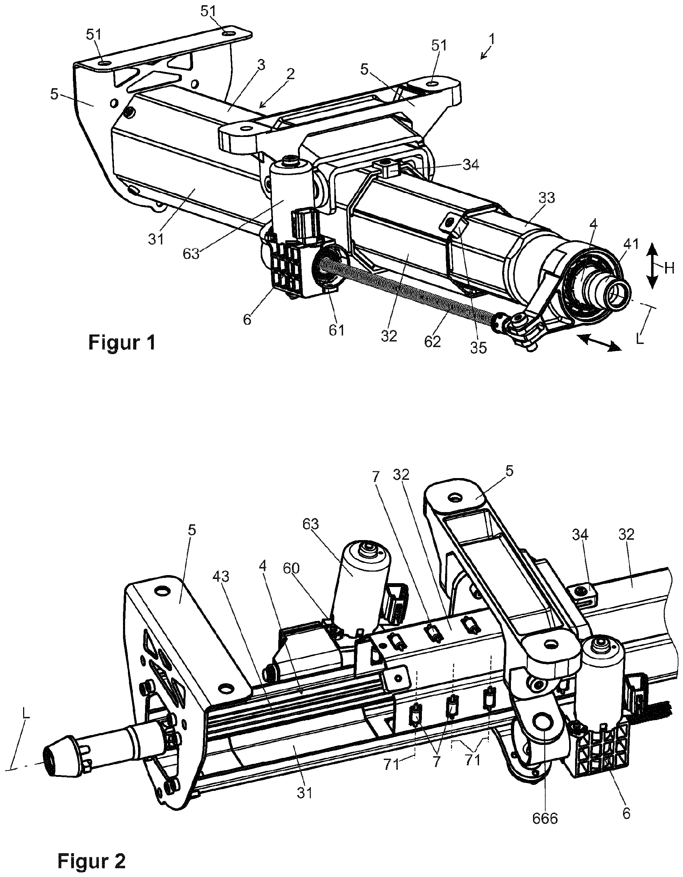

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Längsrichtung, dies entspricht der Achsrichtung einer Längsachse L, teleskopierend verschiebbar koaxial ineinander angeordnet, wie mit einem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 zur Längsverstellung, auch als Längsverstellantrieb bezeichnet, weist einen Spindeltrieb mit einer Spindelmutter 61 und einer darin eingeschraubten Gewindespindel 62 auf, die von einem elektrischen Motor 63 relativ zueinander drehend antreibbar sind. Die Gewindespindel 62 erstreckt sich parallel zur Längsachse L und ist mit dem Innenmantelrohr 33 verbunden, und die Spindelmutter 61 stützt sich über den Verstellantrieb 6 in Längsrichtung, die der Achsrichtung der Längsachse L entspricht, an dem Außenmantelrohr 31 ab, wobei das Außenmantelrohr 31 einen Gabelabschnitt aufweist, und wobei der Verstellantrieb 6 unter Zwischenschaltung eines dämpfenden, als Silentbuchse ausgebildeten Gummielements 666 mit dem Gabelabschnitt gekoppelt ist. Durch eine relative Drehung mittels des Motors 63 werden die Gewindespindel 62 und die Spindelmutter 61 je nach Drehrichtung zusammen oder auseinander bewegt, wodurch das Innenmantelrohr 33 in Achsrichtung in das Außenmantelrohr 31 eingefahren oder ausgefahren wird, wie mit dem Doppelpfeil angedeutet. Dadurch wird eine Längsverstellung realisiert, durch die ein an dem Anschlussabschnitt 41 angebrachtes Lenkrad nach vorn - in der Darstellung von Figur 1 nach links - in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 61 an dem Innenmantelrohr 33, und die Gewindespindel 62 an dem Außenmantelrohr 31 abstützen.

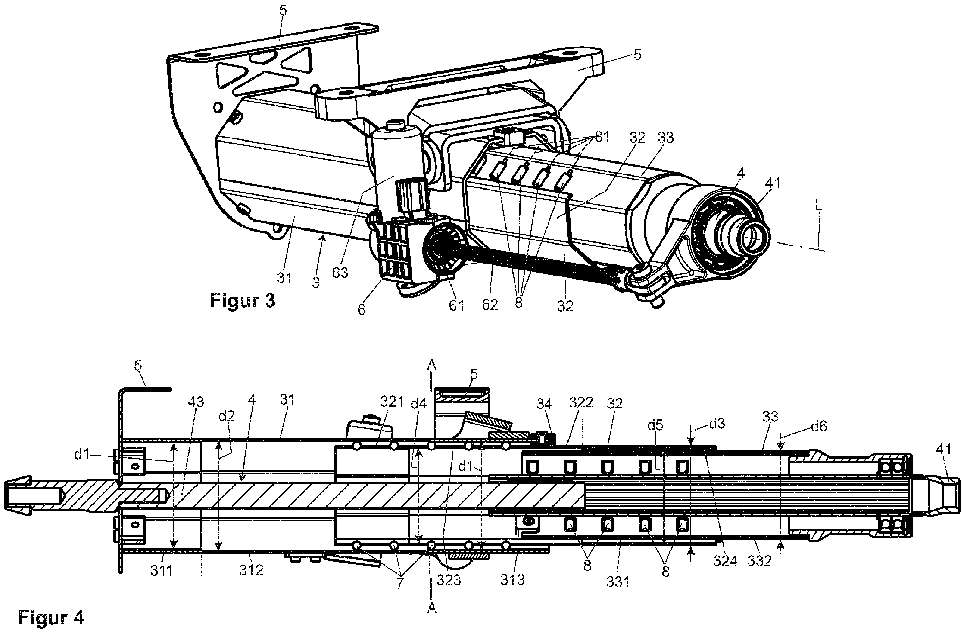

In Figur 2 ist in einer perspektivischen Ansicht von vorn das Außenmantelrohr 31 aufgeschnitten und teilweise weggelassen, so dass der Blick auf das Zwischenmantelrohr 32 freigegeben ist. In Figur 3 in einer Ansicht ähnlich wie in Figur 1 das Zwischenmantelrohr 32 aufgeschnitten dargestellt.

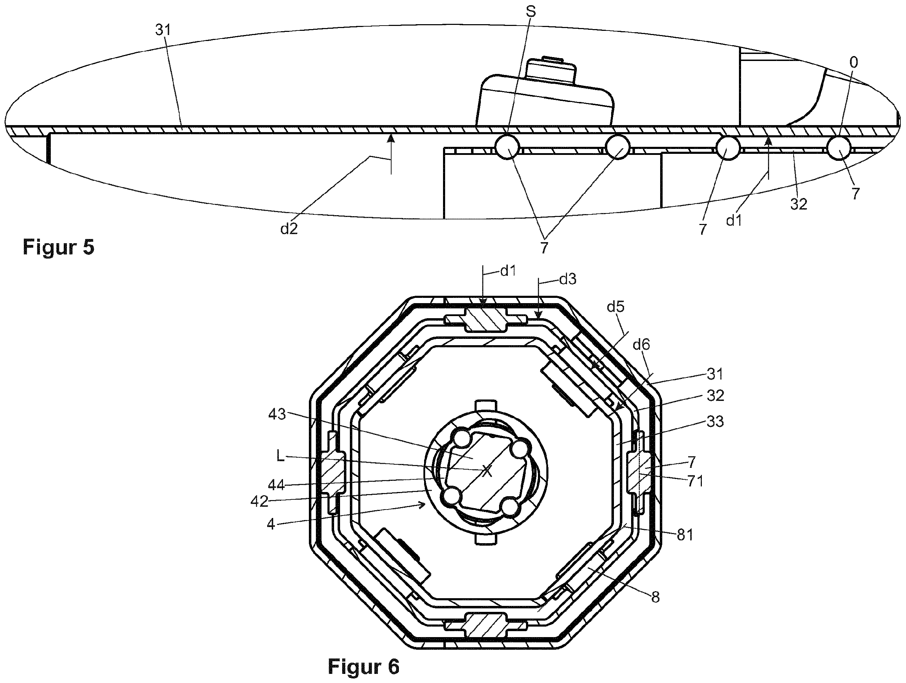

Figur 4 zeigt einen Längsschnitt entlang der Längsachse L, und Figur 5 eine Detailansicht daraus. Figur 6 zeigt einen Querschnitt A-A gemäß Figur 4.

Die Mantelrohre 31, 32 und 33 haben einen achteckigen Profilquerschnitt, wie in Figur 6 erkennbar ist, die einen Querschnitt A-A gemäß Figur 4 durch die Manteleinheit 3 in teilweise ausgefahrenem Zustand zeigt, in dem das Innenmantelrohr 33 und das Zwischenmantelrohr 32 in das Außenmantelrohr 31 teilweise eingefahren sind. Daraus ist entnehmbar, dass die ersten Rollen 7 zwischen dem Außenmantelrohr 31 und dem Zwischenmantelrohr 32, und die zweiten Rollen 8 zwischen dem Zwischenmantelrohr 32 und dem Innenmantelrohr 33 angeordnet sind. Die Rollen 7 bzw. 8 sind dabei um ihre quer zur Längsachse L liegenden Rollenachsen 71 bzw. 81 den Mantelrohren 32 bzw. 33 drehbar gelagert. Die Rollen 7 stehen radial nach außen von dem Außenquerschnitt des Zwischenmantelrohrs 32 vor, so dass sie in Achsrichtung auf der Innenseite des Außenmantelrohrs 31 abrollbar sind, und analog stehen die Rollen 8 radial von dem Außenquerschnitt des Innenmantelrohrs 33 vor, so dass sie in Achsrichtung auf der Innenseite des Zwischenmantelrohrs 32 abrollbar sind. Die Rollen 7 und 8 sind jeweils in Reihen von jeweils fünf Rollen 7,8 in Achsrichtung auf jeder zweiten Seite des achteckigen Profils der Mantelrohre 32, 33 in einem Winkelversatz α von 360° / 8 = 45° angeordnet, die zwischen dem Zwischenmantelrohr 32 und dem Innenmantelrohr 33 in Umfangsrichtung auf Lücke versetzt angeordnet sind, wie deutlich in dem in Figur 6 gezeigten Querschnitt erkennbar ist.

Das Außenmantelrohr 31 weist im Bereich seines vorderen, karosserieseitigen Endes einen ersten inneren Lagerabschnitt 311 mit einer Innenweite d1 auf, an den sich in Achsrichtung nach hinten ein Führungsabschnitt 312 mit einer größeren Innenweite d2 anschließt, also gilt: d1<d2, an den sich an den sich in Achsrichtung nach hinten ein zweiter innerer Lagerabschnitt 313 mit der Innenweite d1 des ersten Lagerabschnitts 311 anschließt. Die jeweilige Innenweite ist der innere Abstand zwischen sich zwei parallel gegenüberliegenden flachen Abschnitten des achteckigen Profilquerschnitts, wobei auf diesen flachen Abschnitten die Rollen 7 abrollen. Sollten Mantelrohre 31, 32, 33 mit kreiszylindrischen Querschnitten zum Einsatz kommen, so ist die Innenweite des jeweiligen Abschnitts mit dem Innendurchmesser des jeweiligen Abschnitts identisch.

Über den Achsbereich der insgesamt jeweils fünf Rollen 7 ist an dem Zwischenmantelrohr 32 ein äußerer Lagerabschnitt 321 gebildet, der einen außen über die vorstehenden Rollen 7 gemessene Außenweite d1 hat, der also identisch ist mit der Innenweite d1 der inneren Lagerabschnitte 311 und 313. Dadurch sind die Rollen 7 spielfrei in den Lagerabschnitten 311 und 313 abrollbar. An den äußeren Lagerabschnitt 321 schließt sich in Achsrichtung nach hinten ein äußerer Führungsabschnitt 322 mit einer kleineren Außenweite d3 an, wobei d3<d1.

Im vorderen Endbereich weist das Zwischenmantelrohr 32 einen inneren Führungsabschnitt 323 mit einer Innenweite d4 auf, an den sich in Achsrichtung nach hinten ein innerer Lagerabschnitt 324 mit einer kleineren Innenweite d5 anschließt, also gilt: d4>d5.

Ähnlich wie das Zwischenmantelrohr 32 weist das Innenmantelrohr 33 einen durch die Reihe der insgesamt fünf Rollen 8 gebildeten äußeren Lagerabschnitt 331 auf, der eine über die nach außen vorstehenden Rollen 8 gemessene Außenweite d5 hat, die also der Innenweite d5 des inneren Lagerabschnitts 324 des Zwischenmantelrohrs 32 entspricht, so dass die Rollen 8 spielfrei abrollen können. An den äußeren Lagerabschnitt 331 schließt sich in Achsrichtung nach hinten ein äußerer Führungsabschnitt 332 mit einer kleineren Außenweite d6 an, wobei also d6<d5.

Die Rollen 7 des äußeren Lagerabschnitts 321 können innen in den inneren Lagerabschnitten 311 und 313 beim relativen Verstellen der Mantelrohre 31 und 32 spielfrei, mit Spiel null (= 0), in Achsrichtung abrollen. Dadurch wird die Teleskopverbindung spielfrei mit hoher Steifigkeit abgestützt, und im Sinne der Erfindung erfolgt eine Verstellung im Komfortbereich. Werden die Mantelrohre 31 und 32 zum Ein- oder Ausfahren in Längsrichtung relativ zueinander bewegt, haben die Rollen 7 im Führungsbereich 312 radiales Spiel S in Größe der Differenz (d2 - d1) zur Innenseite des Außenmantelrohrs 31. Dies ist in der Detaildarstellung von Figur 5 vergrößert dargestellt.

Analog dazu ist das Innenmantelrohr 33 in dem Zwischenmantelrohr 32 gelagert: Die Rollen 8 des äußeren Lagerabschnitts 331 können innen in dem inneren Lagerabschnitt 324 beim relativen Verstellen der Mantelrohre 32 und 33 spielfrei, mit Spiel = 0, in Achsrichtung abrollen. Dadurch wird die Teleskopverbindung spielfrei mit hoher Steifigkeit abgestützt, und im Sinne der Erfindung erfolgt eine Verstellung im Komfortbereich. Werden die Mantelrohre 32 und 33 zum Ein- oder Ausfahren in Längsrichtung relativ zueinander bewegt, haben die Rollen 8 im Führungsabschnitt 323 radiales Spiel S in Größe der Differenz (d4 - d5) zur Innenseite des Zwischenmantelrohrs 32. Dies ist in der Detaildarstellung von Figur 5 vergrößert angedeutet.

Der gesamte Verstellweg der Lenksäule 1 entspricht der Summe der Verstellwege in den Komfortbereichen und im Übergangsbereich. Durch das größere Spiel S muss zur Verstellung in Achsrichtung im Übergangsbereich eine geringere Reibungskraft überwunden werden als in den Komfortbereichen im Bedienbereich und im Bereich der Verstauposition, dem Verstaubereich. Durch den Verstellantrieb 6 muss zur Verstellung im Bedienbereich eine höhere Verstellkraft, die Bedienverstellkraft, als im Übergangsbereich, wo lediglich eine kleinere Verstauverstellkraft aufgewandt werden muss. An dem Außenmantelrohr 31 ist am hinteren Ende ein Anschlag 34 angebracht, der am offenen Ende nach innen in den Zwischenraum zwischen Außenmantelrohr 31 und Zwischenmantelrohr 32 vorsteht. Beim Herausfahren schlägt das Zwischenmantelrohr 32 mit seinen Rollen 7 im äußeren Lagerabschnitt in Achsrichtung gegen den Anschlag 34 an, und ist gegen eine Trennung vom Außenmantelrohr 31 gesichert. Am hinteren Ende des Zwischenmantelrohrs 32 ist ein nach innen in den Zwischenraum zwischen Zwischenmantelrohr 32 und Innenmantelrohr 33 vorstehender Anschlag 35 angebracht, der das Innenmantelrohr 33 dadurch gegen Herausziehen aus dem Zwischenmantelrohr 32 sichert, dass die Rollen 7 in Achsrichtung anschlagen.

Die Lenkspindel 4 ist ebenfalls teleskopierbar ausgebildet, mit einer in eine Außenwelle 42 formschlüssig eingreifenden, in Längsrichtung teleskopierbaren Innenwelle 43, wobei dazwischen eine Führungshülse 44 zur Bildung einer leichtgängigen Gleitführung eingesetzt ist. Alternativ kann zwischen der Innenwelle 43 und der Außenwelle 42 eine lineare Wälzlagerführung vorgesehen sein.

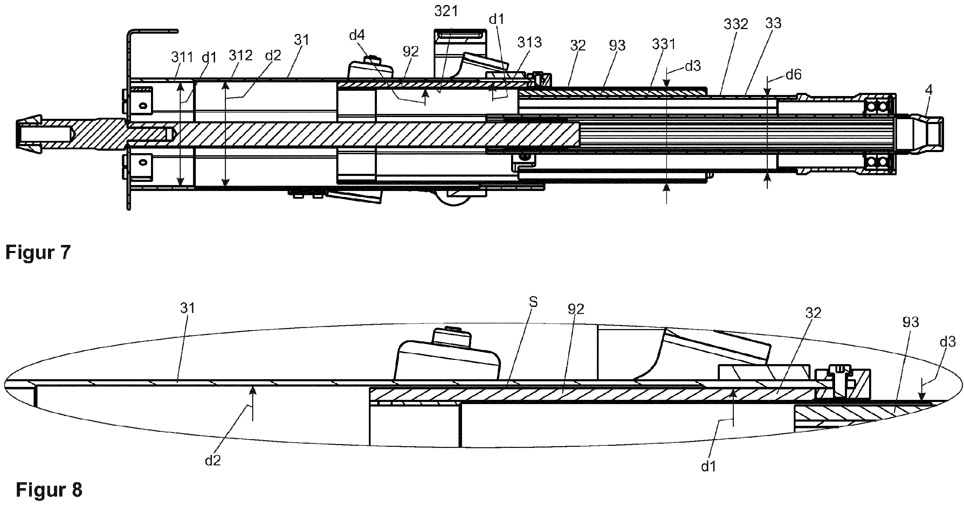

In den Figuren 7 bis 12 ist eine weitere Ausführung der Erfindung dargestellt, die anstelle der Rollen 7, 8 rohrförmige Gleithülsen 92 und 93 aufweist. Die Gleithülse 92 ist zur Bildung eines äußeren Lagerabschnitts 321 hinten auf dem Zwischenmantelrohr 32 befestigt, wobei sie eine Außenweite von im Wesentlichen d1 hat, und ihre Länge in Achsrichtung in etwa der Länge der durch die fünf Rollen 7 auf dem Zwischenmantelrohr 32 gebildeten Reihe der ersten Ausführungsform entspricht. Entsprechend ist die weitere Gleithülse 93 zur Bildung eines äußeren Lagerabschnitts 331 hinten auf dem Innenmantelrohr 33 befestigt, wobei sie einen Außendurchmesser von etwa d5 hat, und ihre Länge in Achsrichtung der Länge der durch die fünf Rollen 7 auf dem Zwischenmantelrohr 32 gebildeten Reihe der ersten Ausführungsform entspricht.

In der vergrößerten Detaildarstellung von Figur 8, welche inhaltlich Figur 5 der ersten Ausführung entspricht, ist die Anordnung der Gleithülse 92 erkennbar, wobei die Anordnung zwischen den Mantelrohren 32 und 33 analog ist.

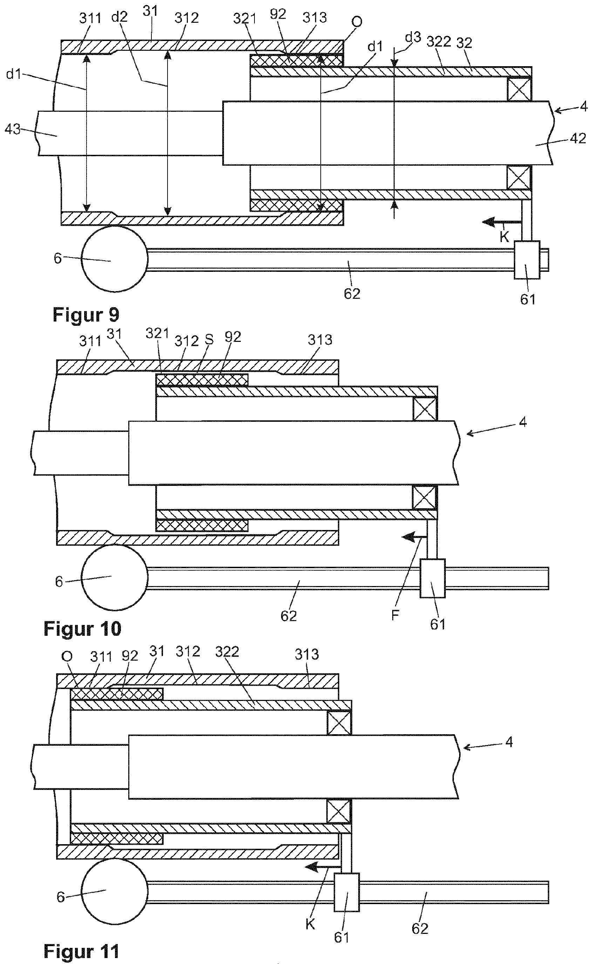

Figur 9 zeigt schematisch eine Lenksäule mit kreiszylindrischen Mantelrohren 31, 32 in einen Komfortbereich in ausgefahrenem Zustand, der dem Bedienbereich entspricht. Die Gleithülse 92 ist als äußerer Lagerabschnitt 321 mit dem als Außenweite ausgebildeten Außendurchmesser d1 in dem inneren Lagerabschnitt 311 des Außenmantelrohrs 31 spielarm bzw. spielfrei gelagert. Durch den Verstellantrieb 6 kann eine relative Verstellung in Achsrichtung zur Feineinstellung einer Lenkradposition erfolgen, wobei die dazu aufzuwendende Komfortverstellkraft K ist.

Figur 10 zeigt die Lenksäule in einem Übergangsbereich, in dem das Mantelrohr 32 aus dem Bedienbereich nach vorn, in der Zeichnung nach links, eingefahren ist. Die Gleithülse 92 und damit der äußere Lagerabschnitt 321 hat Abstand in Achsrichtung zum inneren Lagerabschnitt 313, und befindet sich im inneren Führungsabschnitt 312, wo es Spiel S = (d2 - d1) zur Innenwandung des Außenmantelrohrs 31 hat. Zum Einfahren ist aufgrund der durch das Spiel S verringerten Reibungskraft lediglich eine Übergangsverstellkraft F erforderlich ist, die kleiner ist als die Bedienverstellkraft K (gleich der Komfortverstellkraft), wie mit dem Kraftpfeil angedeutet ist. F < K.

Sobald das die Gleithülse 93 beim weiteren Einfahren aus dem Führungsabschnitt 312 aus dem Führungsabschnitt 312 in den inneren Lagerabschnitt 311 eintritt, wie in Figur 11 gezeigt, wird der Komfortbereich (Verstaubereich) der Verstauposition erreicht. Dort erfolgt wieder eine spielarme Lagerung wie im Lagerabschnitt 313. Dadurch, dass die Lagerabschnitte 311 und 313 im Beispiel denselben Innendurchmesser d1 haben, ist dort zum Verstellen wieder die Komfortverstellkraft K erforderlich. Es ist auch denkbar und möglich, dass der innere Lagerabschnitt 311 einen kleineren oder größeren Innendurchmesser hat, um dort die Komfortverstellkraft K größer oder kleiner vorzugeben.

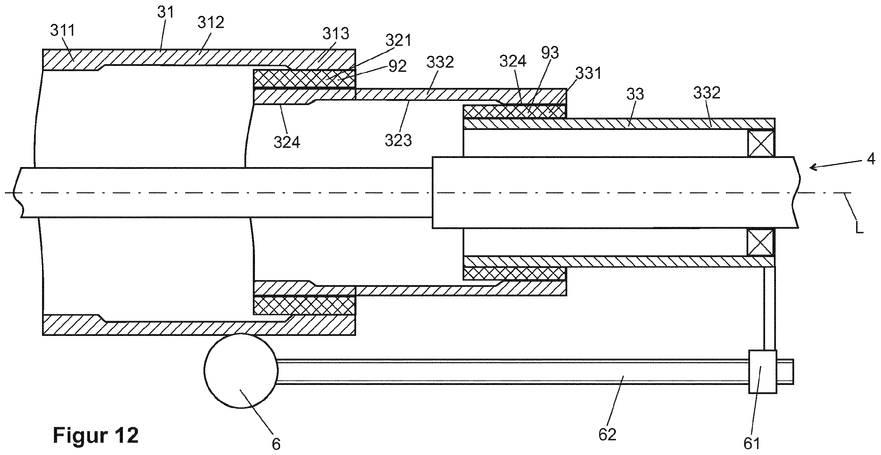

Figur 12 zeigt schematisch eine Mehrfach-Teleskopanordnung mit dem Mantelrohren 31, 32 und 33 und den Gleithülsen 92 und 93, die entsprechend der Figuren 9 bis 11 zusammenwirken.

Der gesamte Verstellweg der Lenksäule 1 umfasst die Verstellpositionen in den Komfortbereichen gemäß den Figuren 9 und 11 und im Übergangsbereich gemäß Figur 10, die beim vollständigen Ein- und Ausfahren durchfahren bzw. eingestellt werden können. Durch das größere Spiel S muss zur Verstellung in Achsrichtung im Übergangsbereich eine geringere Reibungskraft überwunden werden als in den Komfortbereichen im Bedienbereich und im Bereich der Verstauposition.

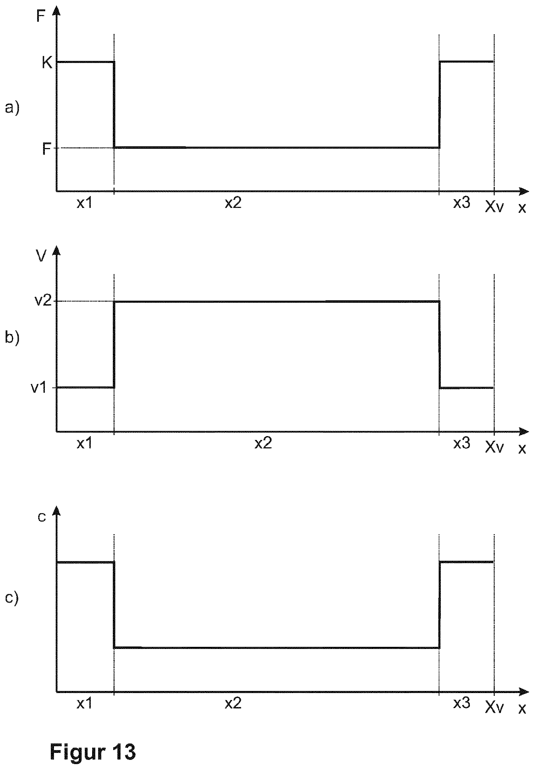

Figur 13 zeigt ein Diagramm, in dem in a) die Verstellkraft F, in b) die Verstellgeschwindigkeit v und in c) die Reibungskraft jeweils über den Verstellweg x (parallel zur Längsachse L) dargestellt ist. Dabei entspricht x1 der Verstellung im Bedienbereich in dem in Figur 11 gezeigten Verstellzustand, x2 der Verstellung im Übergangsbereich in dem in Figur 10 gezeigten Verstellzustand, und x3 der Verstellung im Komfortbereich/Verstaubereich der Verstauposition Xv in dem in Figur 9 gezeigten Verstellzustand.

Aus Figur 13.a) ist klar erkennbar, wie die zur relativen Bewegung der Mantelrohre 31, 32, 33 erforderliche Verstellkraft bei der Verstellung zwischen den Komfortbereichen von der Komfortverstellkraft K auf die geringere Übergangsverstellkraft F abfällt. Als Konsequenz kann durch einen Verstellantrieb 6 mit gegebener Antriebsleistung im Übergangsbereich eine höhere Verstellgeschwindigkeit realisiert werden, wie in Figur 13.b) dargestellt. Die in Figur 13.c) dargestellte, zur Verstellung zu überwindende Reibungskraft c verhält sich analog zur Verstellkraft. Die radiale und vertikale Steifigkeit der Lenksäule verhält sich analog zu der in Figur 13.c) dargestellten Reibkraft.

Gemäß dem erfindungsgemäßen Verfahren wird der Verstellantrieb 6 angesteuert, in dem Bedienbereich x1 eine Verstellung mit einer ersten Verstellgeschwindigkeit v1, der Justieroder Positioniergeschwindigkeit, auszuführen, wobei eine hohe Bedienverstellkraft K ausgeübt wird. In dem sich an den Bedienbereich x1 anschließenden Übergangsbereich x2 erfolgt eine schnellere Verstellung mit einer zweiten Verstellgeschwindigkeit v2, der Übergangsgeschwindigkeit, wobei eine geringere Verstauverstellkraft F ausgeübt wird.

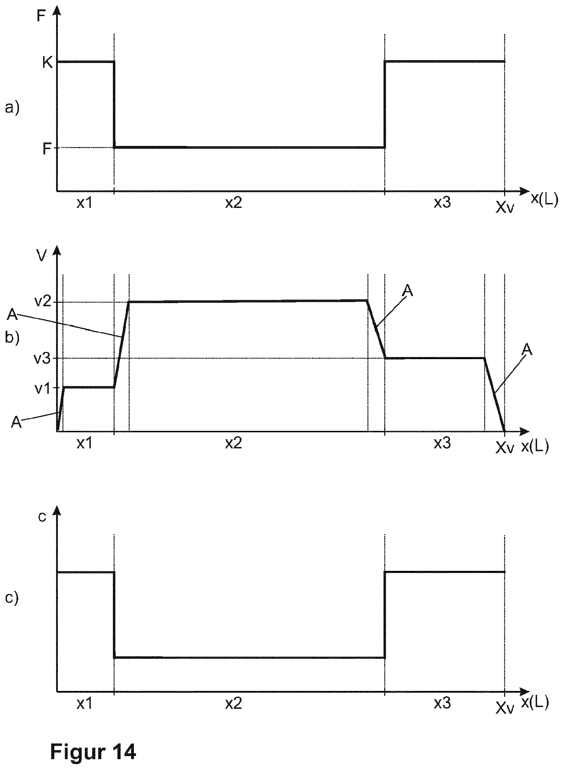

Figur 14 entspricht in den Darstellungen von 14.a) und 14.c) den Diagrammen gemäß Figur 13. Die Verstellung im Bedienbereich x1 erfolgt mit einer dritten Verstellgeschwindigkeit v3, wobei v3=v2 sein kann, oder wie dargestellt: v2>v3>v1.

Ein Unterschied ist, dass jeweils am Anfang und Ende der Bereiche x1, x2 und x3 und damit auch beim Übergang zwischen den Bereichen x1, x2 und x3 die Verstellgeschwindigkeit zwischen null und v1, zwischen v1 und v2, zwischen v2 und v3 sowie zwischen v3 und null jeweils in Beschleunigungsabschnitten A mit konstanter Beschleunigung erhöht bzw. verringert wird. Alternativ zum gezeigten linearen Anstieg und Abfall der Verstellgeschwindigkeit v können auch progressive und/oder degressive Veränderungsverläufe realisiert werden

Mittels eines zweiten Verstellantriebs 60, der einen Höhenverstellantrieb bildet und in Figur 2 erkennbar ist und als Spindeltrieb ähnlich wie der Verstellantrieb 6 ausgebildet sein kann, und der an der Stelleinheit 2 und der Trageinheit 5 angreift, kann die Manteleinheit 3 in der Höhenrichtung H verstellt werden.

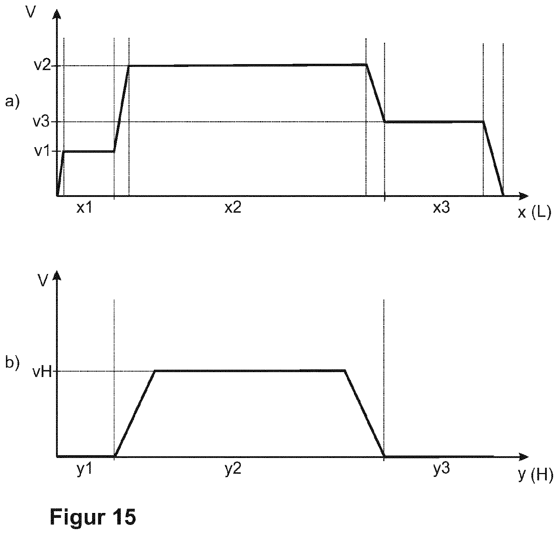

Mittels des Verstellantriebs 60 kann eine Höhenverstellung in y-Richtung parallel zur Höhenrichtung H erfolgen. In dem in Figur 15.b) dargestellten Diagramm bezeichnet y3 die Höhenposition in der Verstauposition, y2 im Übergangsbereich und y1 im Bedienbereich. In Figur15.a) ist die x-Verstellung wie in Figur 14.b) angegeben, und in Figur 15.b) das damit korrespondierende Geschwindigkeits-Weg-Diagramm der Höhenverstellung in y-Richtung (parallel zur Höhenrichtung H), in dem die Höhenverstellgeschwindigkeit über der Höhenposition y aufgetragen ist. Es ist erkennbar, dass eine Höhenverstellung mit der Höhenverstellgeschwindigkeit vH nur im Übergangsbereich x2 erfolgt. Damit erfolgt nur im Übergangsbereich x2 außerhalb des Bedienbereichs x1 eine kombinierte, schnelle Verstauverstellung, und zwar gleichzeitig in Längs- und Höhenrichtung.

Selbstverständlich kann eine Höhenverstellung im Bedienbereich auch durch einen durch den Fahrzeugführer eingegebenen Steuerbefehl erfolgen. Die in Figur 15 dargestellten Diagramme zeigen dabei die Verstellgeschwindigkeiten des inneren Mantelrohrs gegenüber dem äußeren Mantelrohr bzw. der Trageinheit während des Wechsels zwischen autonomem und manuellem Fahrbetrieb.

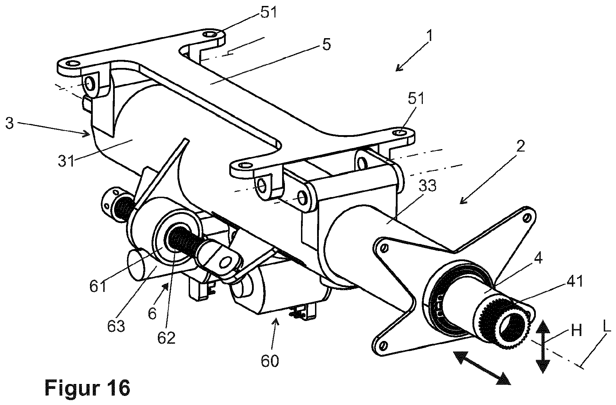

Figur 16 zeigt eine zur Durchführung des erfindungsgemäßen Verfahrens bestimmte Lenksäule 1 in einer zweiten Ausführungsform in einer Ansicht wie in Figur 1, wobei für gleichwirkende Teile dieselben Bezugszeichen verwendet werden.

Im Unterschied zu der Ausführung gemäß Figur 1 wird die Teleskopanordnung der Manteleinheit 3 nur durch das in dem Außenmantelrohr 31 teleskopartig geführte Innenmantelrohr 33 gebildet. Es ist kein Zwischenmantelrohr 32 vorhanden, ansonsten ist die Funktion analog.

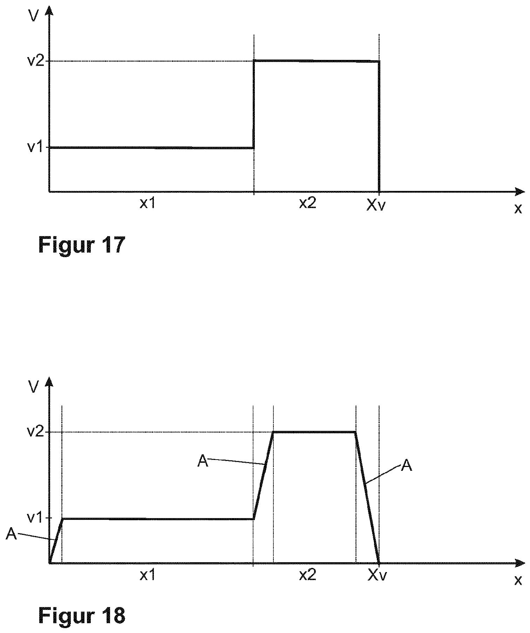

In Figur 17 und 18 sind Geschwindigkeits-Weg-Diagramme gezeigt, die den Diagrammen gemäß Figuren 13.b) und 14.b) entsprechen. Im Übergangsbereich x2 erfolgt die Verstellung mit einer Übergangsgeschwindigkeit v2, die höher ist als die Verstellgeschwindigkeit v1 im Bedienbereich x1. Dabei ist am Ende des Übergangsbereichs x2 die Verstauposition Xv angeordnet. In dieser Ausführung ist kein Verstaubereich vorhanden, anders ausgedrückt kannt auch gesagt werden, das der Verstaubereich durch die Verstauposition gebildet ist. Wie in Figur 18 gezeigt können zwischen den unterschiedlichen auftretenden Verstellgeschwindigkeiten null, v1 und v2 Beschleunigungsabschnitte A vorgehen sein, in denen die Verstellgeschwindigkeit mit konstanter Beschleunigung erhöht bzw. verringert wird. Alternativ zum gezeigten linearen Anstieg und Abfall der Verstellgeschwindigkeit v können auch progressive und/oder degressive Veränderungsverläufe realisiert werden.

### Bezugszeichenliste

- 1: Lenksäule
- 2: Stelleinheit
- 3: Manteleinheit
- 31: Außenmantelrohr
- 311: innerer Lagerabschnitt von 31
- 313: innerer Lagerabschnitt von 31
- 312: innerer Führungssabschnitt von 31
- 32: Zwischenmantelrohr
- 321: äußerer Lagerabschnitt von 32
- 322: äußerer Führungsabschnitt von 32
- 323: innerer Führungsabschnitt von 32
- 324: innerer Lagerabschnitt von 32
- 33: Innenmantelrohr
- 331: äußerer Lagerabschnitt von 33
- 332: äußerer Führungsabschnitt von 33
- 34, 35: Anschlag
- 4: Lenkspindel
- 41: Anschlussabschnitt
- 42: Außenwelle
- 43: Innenwelle
- 44: Führungshülse
- 5: Trageinheit
- 51: Befestigungsmittel
- 6: Verstellantrieb (Längsverstellantrieb)
- 60: Höhenverstellantrieb
- 61: Spindelmutter
- 62: Gewindespindel
- 63: Motor
- 7,8: Rollen
- 71,81: Rollenachsen
- 92, 93: Gleithülsen

- d1: Innendurchmesser von 311/ Außendurchmesser von 321
- d2: Innendurchmesser von 312
- d3: Außendurchmesser von 322
- d4: Innendurchmesser von 323
- d5: Innendurchmesser von 324 / Außendurchmesser von 331
- d6: Außendurchmesser von 332
- L: Längsachse
- S: Spiel
- K: Bedienverstellkraft (Komfortverstellkraft)
- F: Verstauverstellkraft (Übergangsverstellkraft)
- C: Reibungskraft
- x1: Bedienbereich
- x2: Übergangsbereich
- x3: Verstaubereich
- v1: erste Verstellgeschwindigkeit
- v2: zweite Verstellgeschwindigkeit
- v3: dritte Verstellgeschwindigkeit
- vH: Höhenverstellgeschwindigkeit

## Patentansprüche

1. Verfahren zum Verstellen einer Lenksäule (1) für ein Kraftfahrzeug, umfassend eine Manteleinheit (3), in der eine Lenkspindel (4) um eine Längsachse (L) drehbar gelagert ist und die mindestens zwei in Längsrichtung der Längsachse (L) um einen Verstellweg relativ zueinander verstellbar geführte Mantelrohre (31, 32, 33) aufweist, wobei entlang des Verstellwegs in einem Bedienbereich (x1) die Mantelrohre (31, 32, 33) weiter auseinander ausgefahren sind als in einem Übergangsbereich (x2), wobei ein an den Mantelrohren (31, 32, 33) angreifender motorischer Verstellantrieb (6) elektrisch angesteuert wird zur relativen Verstellung der Mantelrohre (31, 32, 33) mit einer vorgegebenen Verstellgeschwindigkeit (v1, v2, v3),
**dadurch gekennzeichnet,**
**dass** abschnittweise in dem Bedienbereich (x1) eine erste Verstellgeschwindigkeit (v1) und im Übergangsbereich (x2) eine zweite Verstellgeschwindigkeit (v2) eingestellt wird, die höher ist als die erste Verstellgeschwindigkeit (v1), wobei eine Veränderung der Verstellgeschwindigkeit beim Übergang zwischen der ersten und zweiten Verstellgeschwindigkeit (v1, v2) erfolgt.

2. Verfahren nach Anspruch 1, **dadurch gekennzeichnet, dass** ein Verstaubereich (x3) vorgesehen ist, in dem die Mantelrohre (31, 32, 33) weiter zusammengefahren sind als in dem Übergangsbereich (x2), wobei in den Verstaubereich (x3) eine dritte Verstellgeschwindigkeit (v3) eingestellt wird, die geringer ist als die zweite Verstellgeschwindigkeit (v2).

3. Verfahren nach einem der vorangehenden Ansprüche, **dadurch gekennzeichnet, dass** eine Veränderung der Verstellgeschwindigkeit (v) linear erfolgt.

4. Verfahren nach einem der vorangehenden Ansprüche, **dadurch gekennzeichnet, dass** eine Veränderung der Verstellgeschwindigkeit (v) nichtlinear erfolgt.

5. Verfahren nach einem der vorangehenden Ansprüche, **dadurch gekennzeichnet, dass** die relative Position der Mantelrohre (31, 32, 33) mittels mindestens eines Positionssensors erfasst wird.

6. Verfahren nach einem der vorangehenden Ansprüche, **dadurch gekennzeichnet, dass** der Verstellantrieb (6) bei einer kleineren Verstellgeschwindigkeit (v1, v3) eine höhere Verstellkraft (K) ausübt als bei einer höheren Verstellgeschwindigkeit (v2).

7. Verfahren nach einem der vorangehenden Ansprüche, **dadurch gekennzeichnet, dass** die Mantelrohre (31, 32, 33) in dem Übergangsbereich (x2) zumindest teilweise mit einer kleineren Verstellkraft (F) relativ zueinander verstellbar sind als im Bedienbereich (x1) und/oder im Verstaubereich (x3).

8. Verfahren nach einem der vorangehenden Ansprüche, **dadurch gekennzeichnet, dass** ein motorischer Höhenverstellantrieb (60) zwischen der Manteleinheit (3) und einer an der Karosserie des Kraftfahrzeugs anbringbaren Trageinheit (5) angebracht ist, der elektrisch ansteuerbar ist zur relativen Höhenverstellung der Manteleinheit (3) quer zur Längsachse (L) mit einer vorgegebenen Höhenverstellgeschwindigkeit (vH).

9. Verfahren nach Anspruch 8, **dadurch gekennzeichnet, dass** die Höhenverstellung zumindest teilweise zeitgleich mit der Längsverstellung in Richtung der Längsachse (L) erfolgt.

10. Verfahren nach Anspruch 8 oder 9, **dadurch gekennzeichnet, dass** die Höhenverstellung im Übergangsbereich (x2) erfolgt.

## Claims

1. A method for adjusting a steering column (1) for a motor vehicle, comprising a casing unit (3) in which a steering spindle (4) is mounted rotatably about a longitudinal axis (L) and which has at least two casing tubes (31, 32, 33) which are guided so as to be adjustable relative to one another by an adjustment travel in the longitudinal direction of the longitudinal axis (L), wherein, along the adjustment travel, the casing tubes (31, 32, 33) are extended further out of one another in an operating region (x1) than in a transitional region (x2), wherein a motorized adjustment drive (6) acting on the casing tubes (31, 32, 33) is actuated electrically for the relative adjustment of the casing tubes (31, 32, 33) at a predetermined adjustment speed (v1, v2, v3),
**characterized in that** a first adjustment speed (v1) is set in portions in the operating region (x1) and a second adjustment speed (v2), which is higher than the first adjustment speed (v1), is set in the transitional region (x2), wherein the adjustment speed changes at the transition between the first and second adjustment speeds (v1, v2).

2. The method as claimed in claim 1, **characterized in that** a stowage region (x3) is provided in which the casing tubes (31, 32, 33) are retracted further into one another than in the transitional region (x2), wherein in the stowage region (x3) a third adjustment speed (v3) is set which is lower than the second adjustment speed (v2).

3. The method as claimed in any of the preceding claims, **characterized in that** the adjustment speed (v) changes linearly.

4. The method as claimed in any of the preceding claims, **characterized in that** the adjustment speed (v) changes non-linearly.

5. The method as claimed in any of the preceding claims, **characterized in that** the relative position of the casing tubes (31, 32, 33) is detected by means of at least one position sensor.

6. The method as claimed in any of the preceding claims, **characterized in that** the adjustment drive (6) exerts a higher adjustment force (K) at a lower adjustment speed (v1, v3) than at a higher adjustment speed (v2).

7. The method as claimed in any of the preceding claims, **characterized in that** the casing tubes (31, 32, 33) are movable relative to one another at least partially with a smaller adjustment force (F) in the transitional region (x2) than in the operating region (x1) and/or in the stowage region (x3).

8. The method as claimed in any of the preceding claims, **characterized in that** a motorized height adjustment drive (60) is arranged between the casing unit (3) and a carrier unit (5) which may be arranged on the body of the motor vehicle, wherein said adjustment drive is electrically actuatable for relative height adjustment of the casing unit (3) transversely to the longitudinal axis (L) with a predefined height adjustment speed (vH).

9. The method as claimed in claim 8, **characterized in that** the height adjustment takes place at least partially simultaneously with the length adjustment in the direction of the longitudinal axis (L).

10. The method as claimed in claim 8 or 9, **characterized in that** the height adjustment takes place in the transitional region (x2).

## Revendications

1. Procédé de réglage d'une colonne de direction (1) pour un véhicule automobile, comprenant une unité d'enveloppe (3) dans laquelle un arbre de direction (4) est monté à rotation autour d'un axe longitudinal (L) et qui présente au moins deux tubes d'enveloppe (31, 32, 33) guidés de manière réglable l'un par rapport à l'autre dans la direction longitudinale de l'axe longitudinal (L) sur une course de réglage, les tubes d'enveloppe (31, 32, 33) étant plus éloignés l'un de l'autre le long de la course de réglage dans une zone de commande (x1), 32, 33) sont plus éloignés l'un de l'autre que dans une zone de transition (x2), un entraînement de réglage (6) motorisé agissant sur les tubes d'enveloppe (31, 32, 33) étant commandé électriquement pour le réglage relatif des tubes d'enveloppe (31, 32, 33) avec une vitesse de réglage (v1, v2, v3) prédéfinie,
**caractérisé par le fait que** les tubes d'enveloppe (31, 32, 33) sont disposés dans la zone de transition (x2),
en ce que l'on règle par sections dans la zone de commande (x1) une première vitesse de réglage (v1) et dans la zone de transition (x2) une deuxième vitesse de réglage (v2) qui est supérieure à la première vitesse de réglage (v1), une modification de la vitesse de réglage ayant lieu lors de la transition entre la première et la deuxième vitesse de réglage (v1, v2).

2. Procédé selon la revendication 1, **caractérisé en ce qu'**il est prévu une zone de rangement (x3) dans laquelle les tubes d'enveloppe (31, 32, 33) sont davantage rapprochés les uns des autres que dans la zone de transition (x2), une troisième vitesse de réglage (v3), qui est inférieure à la deuxième vitesse de réglage (v2), étant réglée dans la zone de rangement (x3).

3. Procédé selon l'une des revendications précédentes, **caractérisé en ce qu'**une modification de la vitesse de réglage (v) s'effectue de manière linéaire.

4. Procédé selon l'une des revendications précédentes, **caractérisé en ce qu'**une modification de la vitesse de réglage (v) s'effectue de manière non linéaire.

5. Procédé selon l'une des revendications précédentes, **caractérisé en ce que** la position relative des tubes d'enveloppe (31, 32, 33) est détectée au moyen d'au moins un capteur de position.

6. Procédé selon l'une des revendications précédentes, **caractérisé en ce que** l'actionneur de réglage (6) exerce une force de réglage (K) plus élevée pour une vitesse de réglage (v1, v3) plus faible que pour une vitesse de réglage (v2) plus élevée.

7. Procédé selon l'une des revendications précédentes, **caractérisé en ce que** les tubes d'enveloppe (31, 32, 33) sont réglables l'un par rapport à l'autre dans la zone de transition (x2) au moins en partie avec une force de réglage (F) plus petite que dans la zone de commande (x1) et/ou la zone de rangement (x3).

8. Procédé selon l'une des revendications précédentes, **caractérisé en ce qu'**un entraînement motorisé de réglage en hauteur (60) est monté entre l'unité d'enveloppe (3) et une unité de support (5) pouvant être montée sur la carrosserie du véhicule automobile, lequel entraînement peut être commandé électriquement pour le réglage en hauteur relatif de l'unité d'enveloppe (3) transversalement à l'axe longitudinal (L) avec une vitesse de réglage en hauteur (vH) prédéterminée.

9. Procédé selon la revendication 8, **caractérisé en ce que** le réglage en hauteur s'effectue au moins partiellement en même temps que le réglage en longueur dans la direction de l'axe longitudinal (L).

10. Procédé selon la revendication 8 ou 9, **caractérisé en ce que** le réglage de la hauteur s'effectue dans la zone de transition (x2).
